(19) 

Europäisches
Patentamt
European
Patent Office
Office européen
des brevets

(11) **EP 2 388 737 A1**

(12) **EUROPEAN PATENT APPLICATION**

(43) Date of publication:
  **23.11.2011 Bulletin 2011/47**

(51) Int Cl.:
  **G06N 3/00** (2006.01)

(21) Application number: **10196879.0**

(22) Date of filing: **23.12.2010**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**

(30) Priority: **18.05.2010 EP 10005189**

(71) Applicant: **Siemens Aktiengesellschaft
  80333 München (DE)**

(72) Inventors:
  • **Gall, Dominik
    80539, München (DE)**
  • **Hartmann, Dirk
    83550, Emmering (DE)**
  • **Klein, Wolfram
    85579, Neubiberg (DE)**
  • **Köster, Gerta
    81543, München (DE)**

Remarks:
  •The references to the drawing no.2a,2b and 2c are
  deemed to be deleted (Rule56(4) EPC).
  •A request for correction of the description has been
  filed pursuant to Rule 139 EPC. A decision on the
  request will be taken during the proceedings before
  the Examining Division (Guidelines for Examination
  in the EPO, A-V, 3.).

(54) **A method for predicting time-evolution of object streams and a corresponding device**

(57)     A method for predicting time-evolution of object
streams and a corresponding device

    The present invention relates to a method for predicting time-evolution of object streams, in particular of a plurality of pedestrians, comprising the steps of identifying parameters for the behaviour of a plurality of individual moving objects, generating a simulation model for the behaviour of the plurality of objects including the identified parameters wherein said simulation model comprises a group simulation model for simulating at least one group, wherein a group comprises at least two individual moving objects, and wherein at least one group is spatially deformable over time and comprises a time stable cohesion, simulating the behaviour according to said simulation model, and interpreting the simulated behaviour.

    The present invention relates also to a corresponding device and a corresponding use of a device.

FIG 4

## Description

The invention relates to a method and a device for predicting time-evolution of object streams, in particular of a plurality of pedestrians.

Technical Background

Object streams and their evolution over time have been in the scientific focus since many years. Moving objects of object streams may include pedestrians, animals, cars, or the like.

For a steering of such object streams an understanding of the interactions between these individual moving objects is essential for a prediction of the time-evolution of such an object stream in the future. In "The distribution of free-forming small group size", John James, American Sociological Review, Vol. 18, No. 5,m pp. 569-570, October 1953 and in "The Not-so-lonely crowd: Friendship Groups in collective behaviour", Adrian F. Aveni, Sociometry, Vol. 40, No. 1, pp. 96-99, March 1977 the potential membership to a certain group was an issue and a distribution of the group size was obtained. In the second reference for example 26% of the polled pedestrians were alone and 74% belong to a group. 54% of this 74% belonging to a group have a group size of 2 pedestrians, 18% have a group size of 3 pedestrians, 16% have a group size of 4 pedestrians and 12% belong to group with a group size with 5 or more group members.

In the publication "Simulation of the kin behaviour in building occupant evacuation based on Cellular Automation" of L.Z. Yang, D.L. Zhao, J. Li, T.Y. Fang of "Building and Environment", volume 40, pages 411 - 415 from the year 2005 a cluster of pedestrians in a cellular automat is modelled: A cluster is defined with persons who are located within a predetermined radius and have the same movement direction. Such pedestrians defining a cluster or group attract each other either in a predetermined radius or in the whole scenario respectively kin behaviour. The above-mentioned assumption is based on the fact that an evacuation of a building is slowed down because of other group members, which have already passed a door, or wait for group members who have not yet passed the door for example. This model is then used to simulate an evacuation of a building.

Further the evacuation time respectively the evacuation speed may be increased by supposing that pedestrians move to a common floor out of separate offices for example and have then the same direction for the evacuation. However, waiting for others slows down the evacuation of the pedestrians.

To influence object streams, devices for predicting time-evolution of object streams are frequently used in several fields, for example for steering pedestrian flows or crowds in critical situations where collective or mass phenomena may endanger pedestrians. Such a steering of pedestrian flows is most effective when the time-evolution of the pedestrian flow could be realistically simulated. Such a prediction may then be used to trigger actions to prevent unwanted or potential dangerous situations which occur in the simulation when the flow situation is projected into the future. Such actions may include for example the opening/closing or widening of doors or oral announcements to influence the direction of moving pedestrians for example via loudspeakers.

Summary of the invention

One object of the present invention is to provide a method and a device for predicting time-evolution of object streams which simulate the object stream more realistically. A further object of the present invention is to provide a method and a device for predicting time-evolution of an object stream which is more flexible. A further object is to provide a method and a device for predicting time-evolution of which allows a reduction in the formation of clusters in object streams.

One aspect of the present invention is directed to a method for predicting time-evolution of object streams, in particular of a plurality of pedestrians, comprising the steps of identifying parameters for the behaviour of a plurality of individual moving objects, generating a simulation model for the behaviour of the plurality of objects including the identified parameters wherein said simulation model comprises a group simulation model for simulating at least one group, wherein a group comprises at least two individual moving objects and wherein at least one group is spatially deformable over time and comprises a time stable cohesion, simulating the behaviour according to said simulation model, and interpreting the simulated behaviour.

A further aspect of the present inventions is directed to a device for predicting time-evolution of object streams, in particular of a plurality of pedestrians, preferably for performing a method according to at least one of the claims 1 - 10, comprising:

capturing means for capturing the current state of the at least one object stream comprising individual moving objects; first analyzing means for analyzing the captured current state; simulation means for predicting a future state of the at least one object stream based on the analyzed state;
second analyzing means for analyzing the predicted future state of the at least one object stream; and presenting means for presenting the analysed predicted future state of the at least one object stream.

A further aspect of the present invention is directed to a use of a device according to claim 11 for steering pedestrian flows, preferably in buildings.

Such a method, such a device and such a use have the advantage that a time-evolution of an object stream could be more easily and efficiently reproduced. A further advantage is that the dynamics of the object streams could be modelled more realistically.

The spatial structure of a group according to claim 1 respectively claim 11 can be deformed by external influences on shorter time scales, for example the shape of a group may be deformed but will re-establish itself when the external force, for example an obstacle or pedestrians of other groups, is removed. Another example is when a couple of pedestrians belonging to the same group walks side by side, but shortly switches two a line formation two pass a small opening, for example a door. All individuals in the group may move with the same speed, except for temporal variations due to the external influences leading to the above-mentioned changes in the shape of the group. For example in cooperative groups, such as families, the velocity of the slowest group member dominates the group's velocity. This ensures that no group member is lost. An example of a non-cooperative group is a stampeding herd of buffalos where the head animal dictates the velocity and weaker group members are lost. To realize such a spatial coherence of a group a potential field is assigned to the group leader which in turn influences the behaviour of all other members of the group and therefore their potentials and thus the behaviour of the group as a whole. To enable different spatial structures of groups depending on external influences, the group leader potential may be dependant on the group size as well as on external influences, for example an average density of surrounding pedestrians or topological dependencies like passing a door.

Further objects will be apparent to those skilled in the art achieved in the present invention in the following description and the sub claims.

According to a further preferred embodiment, said identifying step comprises the step of analyzing foregoing object behaviour. This enables a precise and realistic prediction of the time-evolution of object streams enabling an efficient steering of object streams. The step of analyzing foregoing object behaviour may in case of pedestrian flow lead to the following assumptions: Each group may be seen as an accumulation of objects, for example persons that move with approximately the same speed towards the same destination. Approximately the same speed means that each pedestrian may vary or adapt his own velocity within a certain range but without causing the time stable cohesion to be lost. In human groups a velocity of the slowest individual of the group may dominate the speed of the whole group. Another possibility is that all group members have an individual velocity resulting in an average group velocity with which the group is moving. Further, such a group tends to stay together while moving. Spatial deformation of a group is possible on shorter time scales.

Such spatial deformations occur for example if the group is moving towards an obstacle, for example, a door. The width of the door might be such that only one person may pass the door. The group is then spatially deformed switching from for example a 2 x 2 quadratic spatial structure to a 4 x 1 longitudinal structure to pass the door. After passing the door the group then returns to the 2 x 2 quadratic spatial structure.

Such analysing considers in particular the identification of groups. For example video cameras taking pictures from above on a stream of pedestrians determine these individual moving objects having the same direction and/or have or keep a short distance to each other and/or have in general the same speed. These objects may be regarded as a group. Counting the groups over time provides an estimate about the group distributions in size, speed, etc.

A spatial deformation of a group may be caused by obstacles. Such spatial deformation of a group may be also analysed for example by a video camera. An obstacle may be implemented in a simulation model by potential hills added to existing potentials and thus repulsing moving objectives. This approach of potential fields for obstacles provides an easy and effective way to model spatial deformation of a group caused by an obstacle. When the obstacle potential is reduced, after passing the obstacle, the group will then reduce their spatial deformation. Another option is to define geometrically forbidden areas like obstacles by using repulsive potential fields.

According to a further preferred embodiment said group simulation model models intra group interaction and/or inter group interaction with attraction and/or repulsive potentials. This provides a more realistic simulation model. Further, the simulation model is more flexible due to more interaction possibilities representing realistic behaviour. For example if the group is a human group consisting of three pedestrians, two pedestrians may orally communicate with each other which might be simulated by an increased attractive potential between the two pedestrians. If the third pedestrian should not be allowed to hear the oral communication between the two pedestrians they might tend to isolate him resulting in an increased repulsive potential between each of the two pedestrians with the third pedestrian. To simulate inter group interactions, each pedestrian may have a repulsive potential with the repulsive potentials among group members being weaker compared with interaction potentials between a group member and a non-group member. The group leader may comprise a strong attractive potential to other group members of his group. This attractive potential influences the behaviour or movement of the group members of his group. Inter group interaction may not include interaction only between groups but includes also the interaction of a group with obstacles or the like, in general the surroundings of a group. Therefore for example an obstacle may be simulated by a potential hill resulting in a repulsion of the group from the obstacle.

According to a further preferred embodiment said group simulation model includes modelling of a predefined destination for at least one of the groups. This provides an easy and realistic modelling when for example an evacuation situation occurs, wherein pedestrians walk towards one or more exits. Due to security reasons newer buildings have so-called meeting points in case of an emergency so that after meeting at the meeting point, the group of pedestrians moves towards a predefined exit. Such a predefined destination may be modelled by a potential well for example with the minimum being at the position of the destination. The group moves towards the potential minimum choosing the direction to the destination for example by the steepest-descent-method. Obstacles for example are modelled by potential hills which cause the group to avoid the obstacle by moving along lower potential contour lines towards the destination.

According to a further preferred embodiment said group simulation model models a group with a group leader model for at least one group. This renders the simulation of a group simulation model even more easily and requires for example a lesser amount of memory needed for storing the group simulation model in a computer. Each group may have one group leader. The group leader may be predefined at the beginning of a simulation for example the group leader in case of a pedestrian being a prominent person of the group. However, such a group leader for a group may not change during movement for example in case of pedestrians if the group leader is the only person who knows the destination for the group. This is for example the case, if visitors of the group leader are moving together with the group leader and the group leader shows them some tourist attractions, etc. The group leader model may comprise a group leader in such a way that the group leader moves without influence of the other group members of his group, however, with the restriction that he cannot move to a location or place occupied by another person whether or not the person is a member of his group. The non-group-leader members interact between each other and with the group leader to ensure the spatial coherence of the group over time, for example, by adapting their own free flow velocities in direction and speed.

The group leader model may also include a group leader that may change, for example in case of a pedestrian group two pedestrians each of them knowing one part of the way to the destination. The group leader may then change during the movement of the group to the destination to ensure a reliable movement of the group to the destination. Such a change of a group leader, wherein the previous and the new group leader are group members may be simulated by switching a corresponding parameter indicating the group leader and transferring the previous group leader potential to the new group leader. The previous group leader is then switched or "degraded" to a "normal" group member.

According to a further preferred embodiment of the present invention said group simulation model comprises changing a velocity of at least one group member if a difference between a group velocity and a group member velocity and/or a distance between the group member and the nearest other group member exceeds a predetermined value. Changing a velocity for example accelerating and/or slowing down of at least one group member provides realistic behaviour for example of a pedestrian slowing down for a telephone call resulting in a potential loss of the connection with the group. This leads to an increasing spatial deformation of the group tending to destroy the spatial coherence of the group. When the pedestrian having fallen back accelerates again with respect to the group velocity the coherence of the group can be ensured.

According to a further preferred embodiment of the present invention said group simulation model includes at least one group loosing time stable cohesion, in particular falling apart of the group and/or regrouping of the group and/or forming of a new group. This enables realistic behaviour of groups during movement to a certain destination. For example when pedestrians try to avoid a certain obstacle on the way to the destination they may interact with each other in order to divide the actual group, form temporarily a new group, etc. Regrouping in the sense of melting two separate groups is also a realistic behaviour of pedestrians: For example if not only a group leader of the first group knows the way to the destination but also a group leader of a second group. Further if group members of the first group have the knowledge of the destination they may be included to the second group two provide a group leader for the second group so that the second group may also have the knowledge of and to the destination. Such a regrouping may be modelled by changing parameters of group members which indicate group membership and by changing a parameter indicating the group leader for the group.

According to a further preferred embodiment of the present invention the group leader moves with a group leader free flow velocity identical with the group velocity. This enables the group leader to adapt his velocity to the velocity of surrounding objects, for example pedestrians or change the direction or velocity if an obstacle occurs on the way to the destination of the group.

Each object in particular each pedestrian has its own free flow velocity which may be defined at the beginning of the simulation statistically assigned to each object. This corresponds to an uncooperative group. However, in general the group leader may move with the velocity being a function of the free flow velocities of all group members. A simple and efficient way of choosing the free flow velocity of the group leader is if the group leader simply adapts to the free flow velocity of the slowest group member. A further option is to set the group velocity two the average of the velocities of all group members.

According to a further preferred embodiment of the present invention the group simulation model models a follower with a follower model. A follower model enables to map realistic behaviour of falling back of certain group members trying to catch up again with the group leader to ensure the spatial cohesion of the group. The group leader may also reduce his own velocity and respectively the group velocity to restore the spatial coherence of the group.

According to a further preferred embodiment of the present invention the follower model models a choice of a speed of a follower, a choice of a group object to be followed and/or a communication between the follower and the group leader preferably including signals for waiting. This provides an easy adaption of the follower model to realistic behaviour: If for example the follower has certain obstacles on his way he may adapt or choose his velocity to catch up with the group. He may also for example decide to catch up with another group or forming a new group when contact is lost to his own old group leader.

The follower model may also be based on attraction and/or repulsive potentials. For example, if the follower is not too far away from the group leader determined for example by a threshold value for the distance between the group leader and the follower, the overall potential seen by the follower is the sum of the pedestrian potentials and obstacle potentials and the potential of the group leader. The group leader potential is therefore added to the other potentials of the group members. Further, the pedestrian repulsion potential may also be reduced for members of the same group, for example group members experience a smaller repulsion from other group members than from arbitrary pedestrians, respectively non-group members. If the follower tries to catch up with the group respectively the group leader, the potential of the group leader seen by the follower increases. The follower may adapt his velocity according to the steepest-descent of the group leader potential.

The speed of a follower may also be adapted to the free flow velocity of the group leader, if the follower is sufficiently close, meaning that the distance of the group leader and the follower is smaller than a certain threshold value, to the group leader. Alternatively, the follower adapts a speed only slightly larger than the free flow velocity of the group leader allowing a more dynamical behaviour of the group. This adaption may lead to an acceleration or deceleration of single group members within the group. The overall behaviour of the group, however, is not affected, since a construction of the group leader potential will prevent that followers may speed ahead, for example have a maximum velocity in the order of the group leader velocity. If the velocity of the follower would be significantly higher than the velocity of the group leader, waiting for the movement of the group leader would occur.

If a follower loses the connection to his group the follower may recapture his original free flow velocity after a predetermined time period, esp. after finding back to his original group formation. This "finding back" may be determined with a threshold value for the distance between the follower and the nearest group member or by a threshold value for the attraction potential of the group leader of his group. Since the free flow velocity of a follower is typically larger than the free flow velocity of the group, the follower might catch up with the group again. If the current velocity of the follower is larger than his own free flow velocity once he has lost the group this provides an even more realistic follower model.

If a certain distance between the follower and the group leader exceeds a predetermined threshold value and/or the potential of the group leader seen by the follower falls below a certain threshold value, the follower may send "wait-for-me" signals to the group leader via an appropriate communication protocol. Such signals may be Boolean signals or signals with a certain intensity which may be increased if the distance is not reduced during a certain time period. The group leader receiving the "wait-for-me" signals of the follower adapts or reduces his velocity, preferably depending on the intensity of the sent signals of the follower. Once the follower has caught up with the group leader, for example has reached a certain distance to the group leader again, the follower stops sending "wait-for-me" signals. The group leader then tries to adapt again to the original group free flow velocity after a predetermined time period.

Additionally, the follower may check, whether he has not been able to approach the group for some time as well as whether he has a free sight to the group leader or not. A free sight may be a determined by geometrically checking if an obstacle is between the group leader and the follower for example along a straight line. If both above-mentioned are fulfilled the follower may reduce slowly the intensity of his "'wait-for-me" signals until the follower has again a free sight to the group leader not geometrically blocked by obstacles leading afterwards again to an aggregation of the group leader and the follower meaning a re-establishment of the spatial coherence of the group.

In order to start the simulation, the placement of objects, in particular pedestrians within certain groups is based on a random procedure. The groups may be located closely together so natural behaviour is guaranteed. Further, automatically generated object blocks, in particular pedestrian blocks should be generated in spatial proximity. Since larger groups have a larger spatial requirement the order of generation should depend on the size of the group starting with larger groups first. This guarantees that for example pedestrian groups in pedestrian blocks keep their spatial coherence.

Brief description of the drawings

The features of the invention and the elements characteristic of the invention are further understood in connection with the drawling. The figures in the drawings are for illustration purposes only. They may be best understood by reference to the detailed description which follows taken in conjunction with the accompanying drawings in which

Fig. 1        shows a movement and a formation of groups consisting of two to five pedestrians; and

Fig. 2a-c    each shows a group consisting of four or more pedestrians passing through doors with different widths.

Fig. 3        shows steps of a method according to a preferred embodiment of the present invention;

Fig. 4        shows a device according to a preferred embodiment of the present invention.

Fig. 5a       shows an intensity diagram of a spatially rotated group leader potential;

Fig. 5b-d     shows intensities of group potentials depending on different group sizes;

Fig. 6        shows a schematic diagram of potentials of a simulation model according to a preferred embodiment

Fig. 7        shows a schematic representation of the behaviour of a follower of a group.

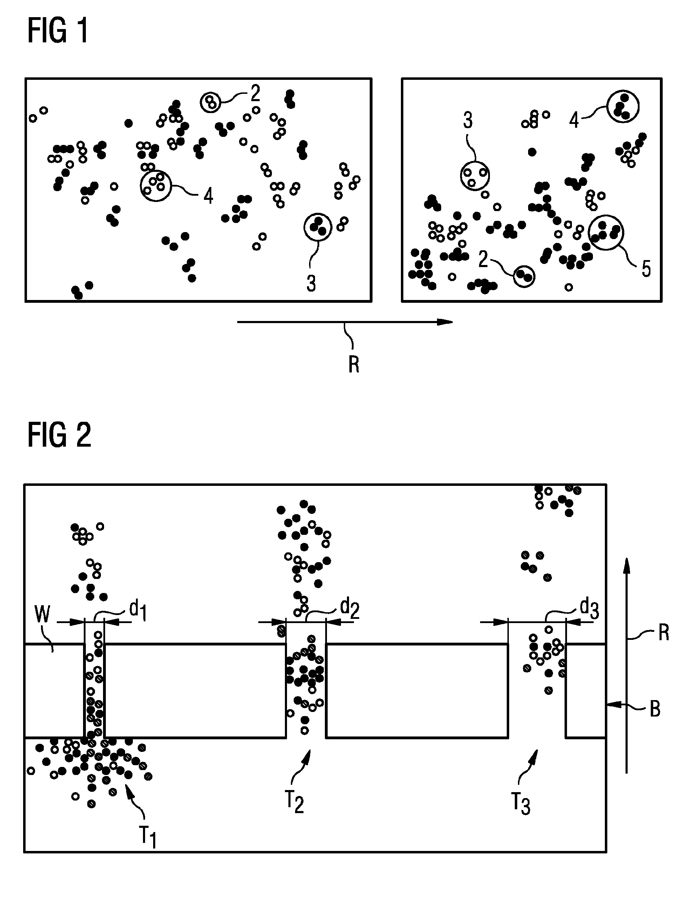

In Fig. 1 there are shown groups 2, 3, 4, 5 denoted by dotted circles consisting of 2, 3, 4 or 5 pedestrians moving from left to right along direction R. The left and right side of fig. 1 shows the time and spatial evolution of the groups moving in direction R.

In Fig. 2 there is shown a building B from the top having a wall W. The wall W comprises three doors $T_1$, $T_2$ and $T_3$, each having different diameters $d_1$, $d_2$, $d_3$. $T_1$ has the smallest diameter $d_1$. Due to the small diameter $d_1$ only a few pedestrians can pass the door simultaneously leading to waiting pedestrians in front of the door for passing through the door. These pedestrians have all a basic free flow velocity which is greater than a given maximum passing rate of door $T_1$ depending on the width and depth of the door $T_1$. Already passed pedestrians belonging to certain groups wait on the other side of the door $T_1$ for the respective other group members to catch up. Crowd building in front of and behind door $T_1$ is the consequence.

In contrast door $T_2$ is broad enough resulting in a higher maximum passing rate, wherein the diameter $d_2$ is greater than diameter $d_1$ of door $T_1$ so that the waiting of pedestrians for passing the door $T_2$ will be avoided. However, different groups of pedestrians are interacting with each other for example by lowering the repulsive potentials with respect to each other to be able to pass simultaneously the door so that a waiting for group members already passed through the door is not occurring.

The door $T_3$ with the greatest diameter $d_3$ allows passing of groups without significant interaction between the different groups. Also each of the groups is able to simultaneously pass the door, so that a spatial deformation of the group is not necessary for passing the door.

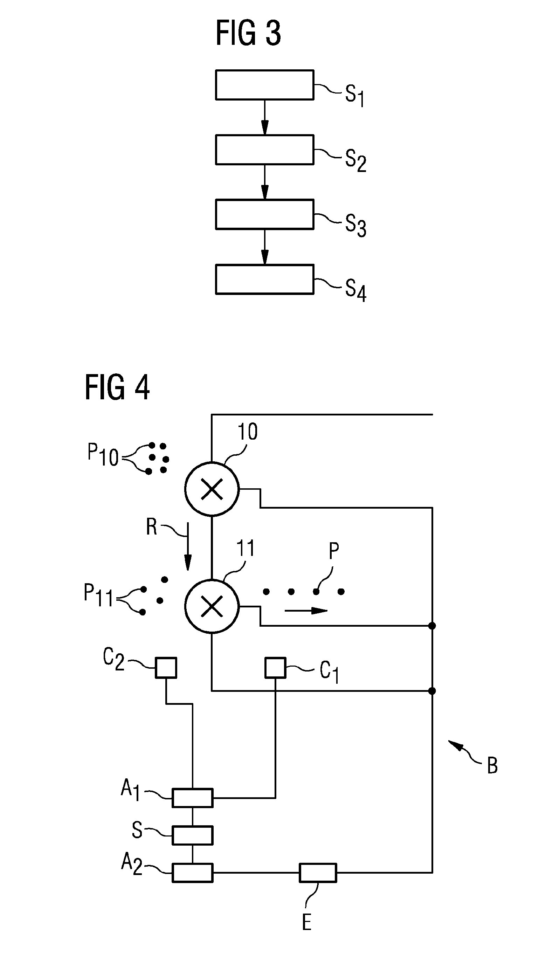

Fig. 3 shows steps of a method according to an embodiment of the present invention. In fig. 3 there are shown steps of a method for steering of object streams, in particular of a plurality of pedestrians. The method comprises a first step $S_1$ of identifying parameters for the behaviour of a plurality of individual moving objects, a second step $S_2$ of generating a simulation model for the behaviour of the plurality of objects including the identified parameters, wherein said simulation model comprises a group simulation model for simulating at least one group, wherein a group comprises at least two individual moving objects, and wherein at least one group is spatially deformable over time and comprises a time stable cohesion individual moving, simulating $S_3$ the behaviour according to said simulation model, and interpreting $S_4$ the simulated behaviour.

Fig. 4 shows capturing means $C_1$, $C_2$ for example video cameras taking pictures of entrances 10, 11 of a building B. Each of the entrances 10, 11 is provided in form of a rotating door. In a first scenarist door or entrance 10 is closed and entrance 11 is open, so that pedestrians $P_{11}$ waiting to enter the building B in front of entrance 11 may enter the building B. Pedestrians $P_{10}$ waiting in front of entrance 10 have to go to entrance 11 to be able to enter the building B.

$$p(xy) = \lambda \cdot \left( \lambda \cdot 1{,}3 \cdot x_4 - 0{,}3 \cdot x_2 + 3{,}7 \cdot y_2 \right)$$

The video-cameras $C_1$, $C_2$ are connected with a first analysing means $A_1$. The first analysing means $A_1$ analyses the number of people passing in a certain time period entrance 11 and also determine for example if crowd building is occurring in front of entrance 11 due to too many pedestrians which want to enter building B.

Simulating means S, for example a computer, simulate the time - evolution under consideration in particular of pedestrians $P_{10}$ moving towards the entrance 11.

Second analysing means $A_2$ analyse the outcome or result of the simulation and present the outcome with presenting means P, for example a monitor of a computer: If for example the outcome of the simulation is such that crowd building in front of the entrance 11 will occur or is highly likely, the second analysing means As are coupled to action means E and initiate an action via the action means E: The action means E, for example an electrical switch, etc. will now open entrance 10 to avoid crowd building in front of entrance 11, so that more persons or pedestrians per time may enter the building B. The analysing means $A_1$, $A_2$ may also be provided in form of a computer.

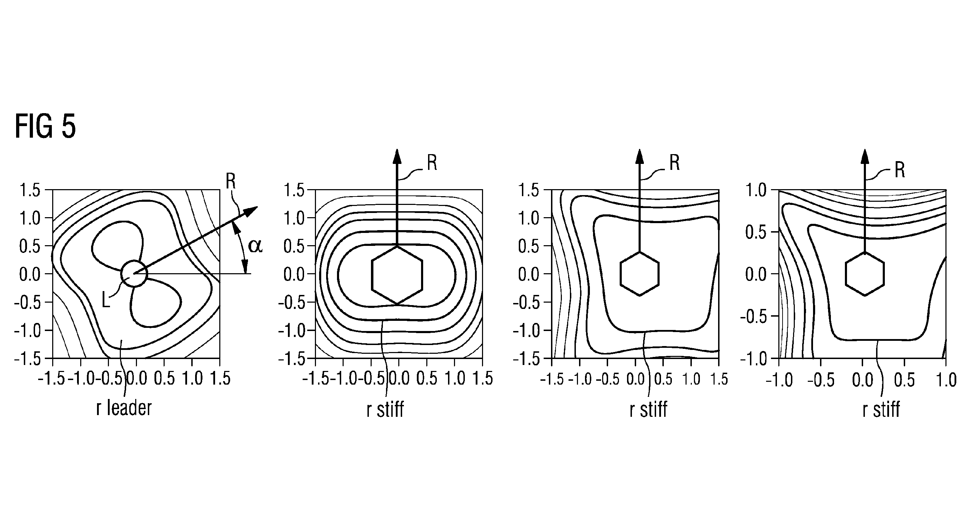

In Fig. 5a there is shown a contour plot of a leader potential $p_{leader}$ with a leader denoted by reference sign L. The leader potential $p_{leader}$ is symmetric and rotated with an angle $\alpha$ in movement direction R. This leader potential

$p_{leader}$ may be represented by formula $P_{leader}(x,y) = P_{stiff} \begin{pmatrix} \sin\alpha - \cos\alpha \\ \cos\alpha \sin\alpha \end{pmatrix} \cdot \begin{pmatrix} x \\ y \end{pmatrix}$, whereas the potential $p_{stiff}$ is chosen according to the group size. The spatial dependence of $p_{stiff}$ allows an adaption according to different situations within one scenario. For groups consisting of two or three persons the following potential p for

$$p(xy) = \lambda \cdot \left( \lambda \cdot 1{,}3 \cdot x_4 - 0{,}3 \cdot x_2 + 3{,}7 \cdot y_2 \right)$$

$p_{stiff}$ may be used, shown Fig. 5b.

For groups consisting of four persons the following potential may be used

$$p(x,y) = \left(\frac{\mu}{2} \cdot (x+y) - 0.2\right)^2 + \left(\frac{\mu}{2} \cdot (-x+y) + 0.2\right)^2 + 6 \cdot \left(\frac{\mu}{2} \cdot (-x+y) + 0{,}3\right)^2 \cdot \left(\frac{\mu}{2} \cdot (x+y) - 0{,}1\right)^2 - \mu \cdot 0{,}15 \cdot y$$

shown in Fig. 5c and for groups larger than four persons the following potential

$$p(x,y) = \left(\mu \cdot (x+y) - 0{,}2\right)^2 + \left(\mu \cdot (-x+y) + 0{,}2\right)^2 + 6 \cdot \left(\mu \cdot (-x+y) + 0{,}3\right)^2 \cdot \left(\mu \cdot (x+y) - 0{,}1\right)^2 - \mu \cdot 0{,}3 \cdot y$$

shown Fig. 5d may be used. The different constants used in the above formulas may be freely chosen to model a realistic behaviour. x and y are the spatial coordinates relative to the group leader, the variables $\mu$ and $\lambda$ may be choosen freely and be adapted during the simulation. Darker colours in the contour plots of Fig. 5a-5d mean higher potentials. Same colours mean in general same potential strength.

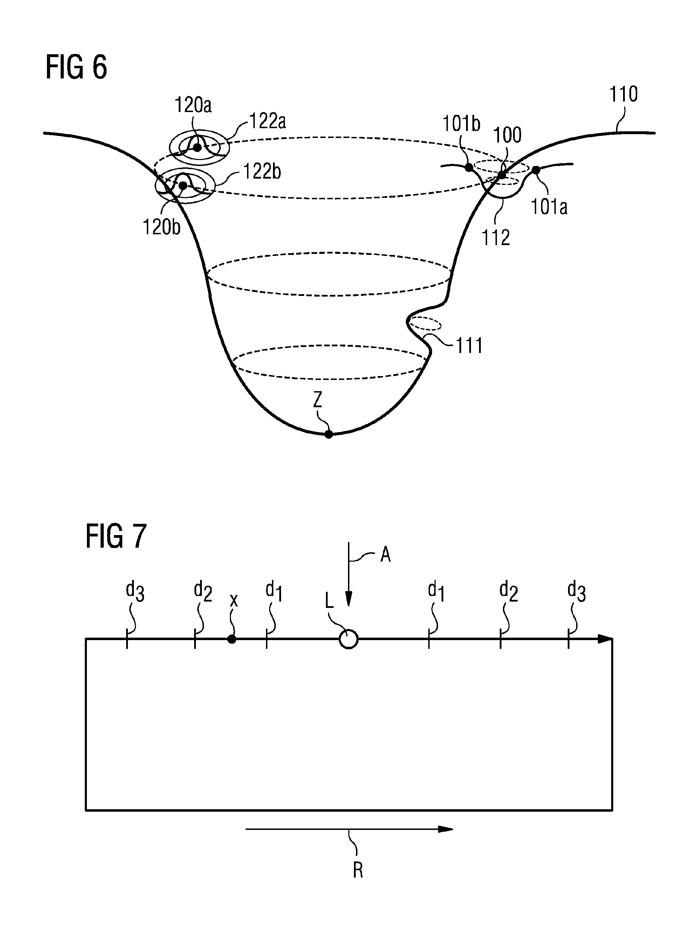

Fig. 6 shows a modelling of a group and single pedestrians with attractive and repulsive potentials.

A common destination Z for example an exit of a building is modelled by a three-dimensional potential well 110. On the contour lines according to the steepest-descent, a group leader 100 moves towards the destination Z.

The group with group leader 100 comprises two group numbers 101a, 101b which are confined in a potential well 112 of the group leader 100. The group leader potential 112 is local and for the group members 101a, 101b attractive. Of course, the group members 101a, 101b are also influenced by destination potential 110, however, the local group leader potential 112 superimposes the destination potential 110.

Obstacles in between the current position of the group and the destination Z are modelled by potential hill 111 superposing the destination potential 110. When the group leader 100 is moving towards the potential hill 111, the contour line with the steepest descent is formed around the potential hill 111 meaning that the obstacle is avoided by the group leader 100.

On the left of Fig. 6 side two single pedestrians 120a, 120b are shown also heading towards the destination Z. Each of them has a repulsive potential 120a, 120b in form of a potential hill to ensure that the two pedestrians do not collide or do not come too close together. Both pedestrians 120a, 120b, however, are moving towards destinations Z following each contour lines of the destination potential 110.

The overall potential is the sum of the attractive potentials of the destination and the group leader potential and the repulsive potentials of the neighbours regardless if they are group members or not and the potential of obstacles, like walls, doors, etc.. However, it is possible that all group members are being attracted by the destination Z and additionally by the leader. Another implementation might be that only the group leader is attracted by the destination Z and the group members are only attracted by the group leader. Variations in the strength of the different potentials may be provided by spatial or time dependant variables.

Fig. 7 shows at position A, a group leader L. In certain euclidian distances $d_1$, $d_2$, $d_3$ represented in two dimensions as circles or in three dimensions as spheres a follower will be modelled differently: If a group member X is within the middle circle $d_2$ the group member considers only the potential of the group leader L. If the group member X is outside the middle circle $d_2$, however, the group member X is a follower and follows respectively considers then only the destination potential. If the group member X leaves the inner circle $d_1$ being now a follower, he sends signals to the group leader to slow down, also called "wait-for-me" signals. If the group member looses connection to the group leader, i.e. his distance is greater than $d_3$, he stops sending "wait-for-me" signals and follows respectively considers only the destination potential.

When catching up with the group leader, group member X reduces the intensity of the wait-for-me signals to zero intensity. In the inner circle $d_1$ the group member X adapts his velocity to the velocity of the group leader to ensure coherence of the group; group member X is nor a follower then anymore.

Behaviour of the pedestrians within the groups, for example the waiting of certain people of the group to pass the door and the waiting after passing the door for the other group members which have not yet passed the door can be predicted easily and precisely with the method according to the present invention. When such "'waiting" behaviour is predicted, for example because a lot of pedestrians move towards one common destination and have to pass through a door the door could be increased in diameter so that a "waiting" behaviour before and after passing the door is not occurring, avoiding critical situations, for example if the pedestrians want to leave the building because of a fire alarm, etc.

While the present invention has been particularly described in conjunction with a specific preferred embodiment, it is evident that many alternatives, modifications and variations will be apparent to those skilled in the art in the light of the foregoing description. It is therefore contemplated that the appended claims will embrace any such alternatives, modifications and variations as falling within the true scope and spirit of the present invention.

**Claims**

1. A method for predicting time-evolution of object streams, in particular of a plurality of pedestrians, comprising the steps of
   identifying ($S_1$) parameters for the behaviour of a plurality of individual moving objects,
   generating ($S_2$) a simulation model for the behaviour of the plurality of objects including the identified parameters wherein said simulation model comprises a group simulation model for simulating at least one group, wherein a group comprises at least two individual moving objects and wherein at least one group is spatially deformable over time and comprises a time stable cohesion,
   simulating ($S_3$) the behaviour according to said simulation model,
   interpreting ($S_4$) the simulated behaviour.

2. The method according to claim 1, wherein
   said identifying step ($S_1$) comprises the step of analyzing foregoing object behaviour.

3. Method according to at least one of the claims 1 - 2,
   wherein
   said group simulation model models intra group interaction and/or inter group interaction with attraction and/or repulsive potentials.

4. The method according to at least one of the claims 1 - 3, wherein
   said group simulation model includes modelling of a predefined destination (Z) for at least one of the groups.

5. The method according to at least one of the claims 1 - 4, wherein
   said group simulation model models a group with a group leader model with a group leader ($p_{leader}$) for at least one group.

6. A method according to at least one of the claims 1 - 5,
   wherein
   said group simulation model comprises changing a velocity of at least one group member if a difference between a group velocity and a group member velocity and/or a distance between a group member and the nearest other group member or the group leader ($P_{leader}$) exceeds a predetermined value.

7. The method according to at least one of the claims 1 - 6, wherein

said group simulation model includes at least one group loosing time stable cohesion, in particular falling apart of the group and/or regrouping of the group and/or forming of a new group.

8. The method according at least one of the claims 1 - 7,
wherein
the group leader (L) moves with a group leader free flow velocity, identical with the group velocity.

9. The method according to at least one of the claims 1 - 8, wherein
said group simulation model models a follower (X) with a follower model.

10. The method according to at least claim 9, wherein
the follower model models a choice of a speed of a follower, a choice of a group object to be followed and/or a communication between the follower and the leader, preferably including signals for waiting.

11. A device for predicting time-evolution of object streams, in particular of a plurality of pedestrians, preferably for performing a method according to at least one of the claims 1 - 10, comprising:

capturing means (C) for capturing the current state of the at least one object stream comprising individual moving objects;
first analyzing means ($A_1$) for analyzing the captured current state;
simulation means (S) for predicting a future state of the at least one object stream based on the analyzed state;
second analyzing means ($A_2$) for analyzing the predicted future state of the at least one object stream; and
presenting means (P) for presenting the analysed predicted future state of the at least one object stream.

12. Device according to claim 11,
comprising action means (E) for initiating at least one action for steering at least one of the object streams.

13. Use of a device according to claim 12 for steering pedestrian flows, preferably in buildings.

FIG 1

FIG 2

## FIG 3

## FIG 4

FIG 5

r leader

r stiff

r stiff

r stiff

EP 2 388 737 A1

FIG 6

FIG 7

**EP 2 388 737 A1**

EUROPEAN SEARCH REPORT

Application Number

EP 10 19 6879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | R. SILVEIRA, E. PRESTES, L. P. NEDEL: "Managing coherent groups", COMPUTER ANIMATION AND VIRTUAL WORLDS, vol. 19, no. 3-4, 11 August 2008 (2008-08-11), pages 295-305, XP055006919, DOI: 10.1002/cav.261 * the whole document * | 1-13 | INV. G06N3/00 |
| X | M. KAPADIA, S. SINGH, W. HEWLETT, P. FALOUTSOS: "Egocentric affordance fields in pedestrian steering", PROCEEDINGS OF THE 2009 SYMPOSIUM ON INTERACTIVE 3D GRAPHICS AND GAMES (I3D'09), 27 February 2009 (2009-02-27), pages 215-223, XP055006938, DOI: 10.1145/1507149.1507185 * the whole document * | 1-13 | |
| X | C. PETERS, C. ENNIS, C. O'SULLIVAN: "Modeling Groups of Plausible Virtual Pedestrians", IEEE COMPUTER GRAPHICS AND APPLICATIONS, vol. 29, no. 4, 21 July 2009 (2009-07-21), pages 54-63, XP011264356, DOI: 10.1109/MCG.2009.69 * the whole document * | 1-13 | TECHNICAL FIELDS SEARCHED (IPC) G06N G06F |
| X | F. QIU, X. HU: "Modeling group structures in pedestrian crowd simulation", SIMULATION MODELLING PRACTICE AND THEORY, vol. 18, no. 2, 17 October 2009 (2009-10-17), pages 190-205, XP026807994, DOI: 10.1016/j.simpat.2009.10.005 * the whole document * | 1-13 | |

-/--

The present search report has been drawn up for all claims

| Place of search | Date of completion of the search | Examiner |
|---|---|---|
| The Hague | 19 September 2011 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt
European
Patent Office
Office européen
des brevets

**EUROPEAN SEARCH REPORT**

Application Number

EP 10 19 6879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | W. GE, R. T. COLLINS, B. RUBACK: "Automatically detecting the small group structure of a crowd", PROCEEDINGS OF THE 2009 WORKSHOP ON APPLICATIONS OF COMPUTER VISION (WACV'09), 7 December 2009 (2009-12-07), XP031622343, DOI: 10.1109/WACV.2009.5403123 * the whole document * | 1-13 | |
| X | J. F. Harrison, C. Vo, J.-M. Lien: "Scalable and robust shepherding via deformable shapes", Department of Computer Science, George Mason University, Technical Report Series, no. GMU-CS-TR-2010-4 January 2010 (2010-01), XP055006932, Retrieved from the Internet: URL:http://masc.cs.gmu.edu/wiki/uploads/DeformGroup/GMU-CS-TR-2010-4.pdf [retrieved on 2011-09-12] * the whole document * | 1-13 | |
| X | M. MOUSSAID, N. PEROZO, S. GARNIER, D. HELBING, G. THERAULAZ: "The walking behaviour of pedestrian social groups and its impact on crowd dynamics", PLOS ONE, vol. 5, no. 4, E10047, 7 April 2010 (2010-04-07), XP055006871, DOI: 10.1371/journal.pone.0010047 * the whole document * | 1-13 | TECHNICAL FIELDS SEARCHED (IPC) |

The present search report has been drawn up for all claims

| Place of search | Date of completion of the search | Examiner |
|---|---|---|
| The Hague | 19 September 2011 | Douarche, Nicolas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................................
& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHN JAMES.** The distribution of free-forming small group size. *American Sociological Review,* October 1953, vol. 18 (5), 569-570
- The Not-so-lonely crowd: Friendship Groups in collective behaviour. *Adrian F. Aveni, Sociometry,* March 1977, vol. 40 (1), 96-99
- **L.Z. YANG ; D.L. ZHAO ; J. LI ; T.Y. FANG.** Simulation of the kin behaviour in building occupant evacuation based on Cellular Automation. *Building and Environment,* 2005, vol. 40, 411-415